# EUROPEAN PATENT APPLICATION

(11) **EP 4 814 850 A1**
(43) Date of publication of application: **30.09.2026**
(21) Application number: 25876427.3
(22) Date of filing: 02.09.2025
(51) Int. Cl.: G06Q 30/0601, H04N 21/2187, H04N 21/254, H04N 21/478, H04N 21/658

(54) **INTERACTION METHOD, INTERACTION APPARATUS, ELECTRONIC DEVICE, AND COMPUTER-READABLE STORAGE MEDIUM**

(30) Priority: 08.10.2024 CN 202411397787
(71) Applicant: BEIJING YOUZHUJU NETWORK TECHNOLOGY CO. LTD., Beijing 101299 (CN); Lemon Inc., Grand Cayman, KY1-1205 (KY)
(72) Inventor: HUANG, Heng, Beijing 100028 (CN); ZHANG, Baopeng, Beijing 100028 (CN); ZHOU, Jingyi, Beijing 100028 (CN); LIU, Yuhang, Beijing 100028 (CN); LI, Yang, Beijing 100028 (CN); ZHANG, Yongkai, Beijing 100028 (CN); WU, Siqi, Beijing 100028 (CN)
(74) Representative: Marks & Clerk LLP
(86) International application number: PCT/CN2025/118490
(87) International publication number: WO 2026/077141

(57) **Abstract**

The present disclosure relates to the technical field of Internet, and relates to an interaction method, an interaction apparatus, an electronic device, and a computer-readable storage medium. The interaction method comprises : recommending an item to a user for content distribution of the user (S10); for an item selected by the user, establishing a binding relationship between the user and identical items in an item distribution center of a content distribution area (S20); and when the user uses the selected item to publish content, for the selected item, displaying an item link corresponding to the content distribution area (S30).

## Description

### CROSS-REFERENCE TO RELATED APPLICATIONS

This application claims priority to Chinese Patent Application No. 202411397787.X, and filed on October 08, 2024. The entire disclosure of the prior application is hereby incorporated by reference in its entirety.

### TECHNICAL FIELD

The present disclosure relates to the technical field of Internet, and in particular, to an interaction method, an interaction apparatus, an electronic device, a computer-readable storage medium, and a non-transitory computer program product.

### BACKGROUND

With the development of Internet technology, users can implement interactions for items by means of the Internet to meet requirements of the users for item. For example, a user may select an item he/she wants to promote and sell, publish shared content, such as a video with an item anchor or a live broadcast with a live shopping bag, and acquire a commission paid by an item provider.

However, in a scene of cross-regional sharing by a user, since available regions of an item (i.e., regions where the item is available for sale) are generally limited while publication regions of the shared content are less limited, inconsistency between the two may cause the item to be unavailable for sale in the content publication regions, thus bringing inconvenience to the user.

For example, on a user side, the user's place of business (or business location) is limited, that is, when an item is selected, only an item, of which available regions are consistent with the place of business can be selected; however, on a consumer side, the user can only purchase an item of which available regions are consistent with a region where he/she is located.

The shared content (such as a short video and a live broadcast) is not limited by the above place of business and place of consumption. For example, a video created by a user in US (i.e., US user) may be distributed to the UK and consumed by a user in UK (i.e., UK user).

When the video created by the US user is an e-commerce video (with an item anchor), the UK user may see the video, but may not see the item anchor due to limitations on available regions of the item. That is, the item anchor or live shopping bag in the shared content is visible only to users in the available regions of the item. This results in a certain waste of resources and also reduces user experience.

### SUMMARY

In view of this, embodiments of the present disclosure provide an interaction method, capable of presenting different item links in different content distribution regions, so that when a user (e.g., a creator) publishes content in different regions by using a selected item, users (e.g., consumers) in the different regions can all see item links corresponding to the regions where they are located, so as to meet requirements for item.

According to a first aspect of the embodiments of the present disclosure, there is provided an interaction method, comprising: recommending items to a user for content distribution by the user; for an item selected by the user, establishing a binding relationship between the user and a same item of an item distribution center of a content distribution region; and in response to the user publishing content by using the selected item, presenting, for the selected item, an item link corresponding to the content distribution region.

According to a second aspect of the embodiments of the present disclosure, there is provided an interaction apparatus, comprising: a recommending module configured to recommend items to a user for content distribution by the user; an establishing module configured to, for an item selected by the user, establish a binding relationship between the user and a same item of an item distribution center of a content distribution region; and a presenting module configured to, in response to the user publishing content by using the selected item, present, for the selected item, an item link corresponding to the content distribution region.

According to a third aspect of the embodiments of the present disclosure, there is provided an electronic device, comprising: a memory; and a processor coupled to the memory, the processor being configured to perform, based on instructions stored in the memory, any of the above interaction methods.

According to a fourth aspect of the embodiments of the present disclosure, there is provided a computer-readable storage medium having thereon stored a computer program which, when executed by a processor, implements any of the above interaction methods.

According to a fifth aspect of the embodiments of the present disclosure, there is provided a computer program product which, when run on a computer, causes the computer to implement any of the above interaction methods.

Other features of the present disclosure and advantages thereof will become apparent from the following detailed description of exemplary embodiments thereof, which proceeds with reference to the accompanying drawings.

### BRIEF DESCRIPTION OF THE DRAWINGS

Preferred embodiments of the present disclosure are described below with reference to the accompanying drawings. It should be understood that the drawings in the following description relate to only some embodiments of the present disclosure, rather than limiting the present disclosure. In the drawings:
Fig. 1 illustrates a flow diagram of an interaction method according to some embodiments of the present disclosure;
Fig. 2 illustrates a flow diagram of a process before establishing a binding relationship between a user and an item according to some embodiments of the present disclosure;
Fig. 3 illustrates a schematic diagram of a system architecture of a server according to some embodiments of the present disclosure;
Fig. 4 illustrates a flow diagram of presenting an item link corresponding to a content distribution region according to some embodiments of the present disclosure;
Fig. 5 illustrates a block diagram of an interaction apparatus according to some embodiments of the present disclosure;
Fig. 6 illustrates a block diagram of an interaction apparatus according to other embodiments of the present disclosure;
Fig. 7 illustrates a block diagram of an electronic device according to some embodiments of the present disclosure.

### DETAILED DESCRIPTION

The technical solutions in the embodiments of the present disclosure will be clearly and completely described below in conjunction with the drawings in the embodiments of the present disclosure. It should be understood that the present disclosure may be implemented in various forms and should not be construed as limited to the embodiments set forth herein. The following description of the embodiments is merely illustrative in nature and is in no way intended to limit this disclosure, and its application or use.

The steps recited in method embodiments of the present disclosure may be performed in a different order, and/or performed in parallel. Moreover, the method embodiments may comprise additional steps and/or omit performing the illustrated steps. Unless specifically stated otherwise, the relative arrangement and numbers of components and steps set forth in these embodiments should be construed as merely exemplary, without limiting the scope of the present disclosure.

The term "comprise" and variations thereof as used in this disclosure refer to open-ended terms that comprise at least the following elements/features, but do not exclude other elements/features, i.e., "comprising but not limited to". The term "based on" refers to "at least partially based on".

"Some embodiments" or "an embodiment" in the present disclosure means that a specific feature, structure, or characteristic described in conjunction with an embodiment is comprised in at least one embodiment. For example, the term "some embodiments" represents "at least some embodiments". Moreover, appearances of "in some embodiments" or "in an embodiment" in various places may refer to the same embodiment, but not necessarily all refer to the same embodiment.

It should be noted that the concepts such as "first" and "second" mentioned in the present disclosure are only used for distinguishing different devices, modules or units, and are not used for limiting the order or interdependence of functions performed by the devices, modules or units. Unless otherwise specified, the concepts such as "first" and "second" are not intended to imply that the objects so described must be in a given order on time, space, and ranking, or a given order of any other way.

The modification of "a", "a plurality of" mentioned in the present disclosure are intended to be illustrative rather than limiting, and those skilled in the art should understand that it should be understood as "one or more" unless otherwise explicitly stated in the context.

User information (comprising but not limited to user equipment information, user personal information, etc.) and data (comprising but not limited to data for analysis, stored data, presented data, etc.) involved in the present disclosure are all information and data authorized by users or fully authorized by all parties, and collection, use and processing of relevant data need to comply with relevant laws and regulations and standards in relevant countries and regions, and are provided with corresponding operation entries for the users to select authorization or denial.

The embodiments of the present disclosure are described in detail below in conjunction with the accompanying drawings, but the present disclosure is not limited to these specific embodiments. These specific embodiments may be combined with each other below, and the same or similar concepts or processes may not be repeated in some embodiments. Furthermore, in one or more embodiments, a specific feature, structure, or characteristic may be combined in any suitable manner which one of ordinary skill in the art would understand from this disclosure.

In a scene of cross-regional sharing, there are mainly two item provider modes on an e-commerce platform, namely, a cross-border full managed item provider and a business-to-business item provider.

A business entity of the cross-border full managed item provider is item providers of an enterprise of a certain country, these item providers are suppliers of the e-commerce platform, and items are operated by an operation team of the e-commerce platform; the e-commerce platform will open shops for these item providers in a plurality of regions, namely there are different item distribution centers in different regions.

A business entity of the business-to-business item provider is item providers of a local enterprise, for example, a certain brand registered in US settled in the e-commerce platform, and this item provider is a business-to-business item provider in US. The business-to-business item provider has only one place of business, namely the local region.

In order that when a user (such as a creator) publishes content by using a selected item to different regions (such as different countries) in a case where an item is limited by the place of business and place of consumption, users (such as consumers) in the different regions can all see an item anchor available for purchase, to meet requirements for item, for example, ordering, the present disclosure provides different solutions for different item provider modes, namely, same-item-from-same-item provider (e.g., same-product-from-same-seller) for the cross-border full managed item provider, and same-item-from-different-item provider (e.g., same-product-from-different-seller) for the business-to-business item provider.

For the same-product-from-same-seller, it is possible to associate item identifications (e.g. product IDs, PIDs) by creating a main item-subitem association, for example, associate subitem identifications of same item(s) in different regions to a same main item identification. When the user selects an item, a processing system of the e-commerce platform can identify whether the currently selected item has a corresponding main item, whether the main item has a corresponding subitem in other region(s), and can further identify whether the corresponding subitem has a valid affiliate marketing plan, that is, whether a commission is provided. In this process, it is also possible to present, to the user, distribution information of the item in item distribution centers of different regions, for example, estimated commissions, commissioning rates or other information which can be obtained for sale in other regions. When the user adds the item to an operation window, a one-to-many user-item (i.e., user-items) binding relationship can be generated; and when the user publishes an e-commerce video by using the item, the system can present an item link corresponding to a content distribution region, for example, perform an item link change according to the content distribution region, to change the presented item link into a link of an item available for sale corresponding to the content distribution region.

For the same-product-from-different-seller, when the user selects an item, the processing system of the e-commerce platform can call a same item identification algorithm to search, in other regions, for a same item as the item. For example, based on text information, picture information, or the like of the item, other item providers different from the item provider, to which the item selected by the user belongs, are searched for same items in item distribution centers of other regions, that is, a same item P1' sold by an item provider b in a country B is searched for an item P1 sold by an item provider a in a country A. In this process, it is also possible to present, to the user, the searched distribution information of the same items in the item distribution centers of the different regions, for example, information of the item distribution centers, information of the items, and information of estimated commissions, commission rates, or the like. When the user adds the item to an operation window, a one-to-many user-item binding relationship will also be generated; and when the user publishes an e-commerce video by using the item, the system will present an item link corresponding to a content distribution region, for example, perform an item link change according to the content distribution region, to change the presented item link to a link of an item available for sale corresponding to the content distribution region.

That is to say, regardless of the item provider mode, a more efficient interaction method can be provided between a platform and a user (such as a creator, a consumer), which can, for an item selected by the user, establish a binding relationship between the user and a same item of an item distribution center of a content distribution region, and in response to the user publishing content by using the selected item, and present, for the selected item, an item link corresponding to the content distribution region to the user, the consumer and the like, so that users in different regions can all see item links corresponding to regions where they are located, to meet requirements for item. The embodiments of the present disclosure are described in detail below in conjunction with the accompanying drawings.

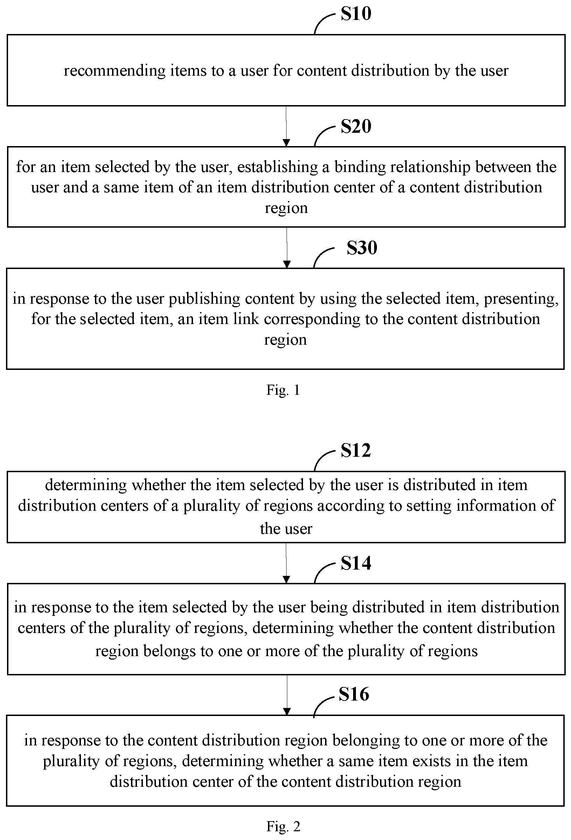

Fig. 1 illustrates a flow diagram of an interaction method according to some embodiments of the present disclosure.

As shown in Fig. 1, the interaction method comprises: step S10, recommending items to a user for content distribution by the user; step S20, for an item selected by the user, establishing a binding relationship between the user and a same item of an item distribution center of a content distribution region; and step S30, in response to the user publishing content by using the selected item, presenting, for the selected item, an item link corresponding to the content distribution region.

At the step S10, items may be recommended to a user, for selection by the user for content distribution, according to preferences of the user and distribution modes of the items.

The preferences of the user may be embodied in selection of the user for a content distribution region, an item, etc. The distribution modes of the items may be embodied in differences in types of item providers to which they belong, regions where item distribution centers are located, etc., for example, whether the item provider, to which the item belongs, has item distribution centers in different regions, whether the item distribution centers have same items in these item distribution centers, and whether the region where the item distribution center is located is within a range of the content distribution regions.

For example, it is possible to query related information of items in different regions, comprising information of items providers to which the items belong, information of commissions provided by item distribution centers in the different regions, etc., and provide the corresponding information to the user, so that the user selects an item for content distribution.

At the step S20, since types of item providers to which different items belong are different, the established binding relationships between the user and same items are different.

For the same-product-from-same-seller, the binding relationship comprises a first binding relationship. In some embodiments, for an item selected by the user, establishing a binding relationship between the user and a same item of an item distribution center of a content distribution region comprises: determining, in the content distribution region, whether a same item exists in an item distribution center that belongs to a same item provider as the item selected by the user, that is, determining whether same-product-from-same-seller exists in the content distribution region; and in response to in the content distribution region, the same item existing in the item distribution center that belongs to the same item provider as the item selected by the user, binding the user with the item selected by the user and the same item of the same item provider in the item distribution center of the content distribution region, to establish a first binding relationship between the user and same items.

For the same-product-from-same-seller, the interaction method according to some embodiments of the present disclosure may further comprise: for same items of item distribution centers of different regions belonging to the same item provider, creating a first association, to associate subitem identifications of the same items of the item distribution centers of the different regions to a same main item identification.

**Table 1 shows an example of a first association. As shown in Table 1, a main item ID1 is associated with subitem ID11, ID12, ...... ID1n of same items in item distribution centers of different regions. Table 1: First association**

| Master item ID1 |
|---|
| Same item of item distribution center in region 1: subitem ID11 |
| Same item of item distribution center in region 2: subitem ID12 |
| Same item of item distribution center in region 3: subitem ID13 |
| ... ... |
| Same item of item distribution center in region n: subitem ID1n |

The first association as shown in Table 1 may be pre-stored for subsequent use. For example, it is possible to determine, according to these stored first associations, in the content distribution region, whether a same item exists in an item distribution center that belongs to a same item provider as the item selected by the user, by means of retrieval, match, or the like.

In some embodiments, the determining, in the content distribution region, whether a same item exists in an item distribution center that belongs to a same item provider as the item selected by the user comprises: determining whether the item selected by the user has a corresponding main item and whether the main item has a corresponding subitem in the item distribution center of the content distribution region according to the first association.

For example, an identification of the item selected by the user is the subitem ID11, that is, a region 1, which is a region where the user is located, belongs to the content distribution region, and according to Table 1, a main item (with an identification of ID1) exists. If both regions 2 and 3 belong to the content distribution region, same-product-from-same-seller exists in both the content distribution regions 2 and 3. In this case, a first binding relationship as shown in Table 2 may be established.

Table 2 shows an example of the first binding relationship. As shown in Table 2, the user-selected item ID11 is bound with the subitems ID12, ID13 of the same items of item distribution centers of the content distribution regions 2 and 3.

**Table 2: First binding relationship**

| |
|---|
| Content distribution region 1: user ID-user selected item ID11 |
| Content distribution region 2: user ID-subitem ID12 |
| Content distribution region 3: user ID-subitem ID13 |

Of course, if no main item having the first association exists for the item selected by the user, no same-product-from-same-seller exists in the content distribution region. Alternatively, if the content distribution region is not within the range of the regions listed in Table 1, no same-product-from-same-seller exists in the content distribution region.

For the case where no same-product-from-same-seller exists in the content distribution region, it is possible to further determine whether same-product-from-different-seller exists. Of course, considering the user experience, it is also possible to concurrently or simultaneously determine whether the same-product-from-different-seller exists.

For the same-product-from-different-seller, the binding relationship comprises a second binding relationship. In other embodiments, for an item selected by the user, establishing a binding relationship between the user and a same item of an item distribution center of a content distribution region comprises: searching for a same item of other item provider in the item distribution center of the content distribution region, wherein the other item provider is different from the item provider to which the item selected by the user belongs; and binding the user with the item selected by the user and the same item of the other item provider in the item distribution center of the content distribution region, to establish a second binding relationship between the user and a plurality of the same items.

When searching for the same-product-from-different-seller, it is possible to search in each content distribution region according to related information of the item by using a same item identification algorithm. In some embodiments, the same item of the other item provider in the item distribution center of the content distribution region is searched for according to related text information and picture information of the item. For example, the same item of the other item provider in the item distribution center of the content distribution region is searched for by using the same item identification algorithm. The same item identification algorithm is, for example, an SPU (Standard Product Unit) same item identification algorithm.

Of course, it is also possible to search for, by using a pre-stored association between same-product-from-different-sellers, the same-product-from-different-seller in the content distribution region. In this case, the interaction method according to some embodiments of the present disclosure may further comprise: according to related information of the item, creating a second association to associate item identifications of same items of item distribution centers of different regions.

Table 3 shows an example of the second association. As shown in Table 3, for IDi, same items IDi1, IDi2, ...... IDin of item distribution centers of different item provider exist in different regions.

**Table 3: Second association**

| |
|---|
| Same item of item distribution center in item provider 1 of region 1: ID11 |
| Same item of item distribution center in item provider 2 of region 2: ID12 |
| Same item of item distribution center in item provider 3 of region 3: ID13 |
| ...... |
| Same item of item distribution center in item provider n of region n: ID1n |

The second association as shown in Table 3 may be pre-stored for subsequent use. For example, it is possible to determine, according to these stored second associations, whether same-product-from-different-seller exists in the content distribution region by means of retrieval, match, and the like.

In some embodiments, the searching for a same item of another item provider in the item distribution center of the content distribution region comprises: searching for, in the content distribution region, an item of which an item identification has the second association with the item selected by the user, as the same item of the other item provider in the item distribution center of the content distribution region.

For example, the item selected by the user is an item ID11 of an item provider 1 in the item distribution center of the content distribution region 1. According to Table 3, if both regions 2 and 3 belong to the content distribution region(s), the same-product-from-different-seller exists in both the content distribution regions 2 and 3. In this case, a second binding relationship as shown in Table 4 may be established.

Table 4 shows an example of the second binding relationship. As shown in Table 4, the user-selected item ID11 is bound with item ID12 and ID13 of same items of the item distribution centers of the content distribution regions 2 and 3.

**Table 4: Second binding relationship**

| |
|---|
| Content distribution region 1, item provider 1: user ID-user selected item ID11 |
| Content distribution region 2, item provider 2: user ID- item ID12 |
| Content distribution region 3, item provider 3: user ID- item ID13 |

Of course, if no item having the second association exists for the item selected by the user, no same-product-from-different-seller exists in the content distribution region either. Alternatively, if the content distribution region is not within the range of the regions listed in Table 4, no same-product-from-different-seller exists in the content distribution region either.

The process before establishing the binding relationship between the user and the item is further described below in conjunction with Fig. 2. Fig. 2 illustrates a flow diagram of a process before establishing a binding relationship between the user and the item according to some embodiments of the present disclosure.

As shown in Fig. 2, the interaction method according to some embodiments of the present disclosure, before the establishing a binding relationship between the user and a same item in an item distribution center of a content distribution region, further comprises: step S12, determining whether the item selected by the user is distributed in item distribution centers of a plurality of regions according to setting information of the user; step S14, in response to the item selected by the user being distributed in item distribution centers of the plurality of regions, determining whether the content distribution region belongs to one or more of the plurality of regions; step S16, in response to the content distribution region belonging to one or more of the plurality of regions, determining whether a same item exists in the item distribution center of the content distribution region.

At the step S12, it is possible to first acquire interchanging (or interworking) setting of the user, and then according to the interchanging setting of the user, determine whether the item selected by the user is distributed in item distribution centers of a plurality of regions.

If the interchanging setting of the user is non-interchanging, the item selected by the user is not distributed in the item distribution centers of the plurality of regions, that is, it is sold only locally and not in other regions.

If the interchanging setting of the user is interchanging, the item selected by the user is distributed in the item distribution centers of the plurality of regions. In this case, it is possible to present in which regions the item selected by the user can be sold, i.e., in which content distribution regions the item link is presented.

Then, at the step S14, when the interchanging setting of the user is interchanging, it is determined whether the content distribution region belongs to one or more of the above interchanging regions, for example, in an interchanging region list.

If the content distribution region is not in the interchanging region list, the user can update his interchanging setting, and modify the interchanging region list to enable inclusion of one or more of the content distribution regions.

Next, at the step S16, if the content distribution region is in the interchanging region list, it is possible to acquire the interchanging setting for the item, for example, whether a same item as the selected item exists in other region than the local region, and whether a same item as the selected item exists in each content distribution region. Here, it is also possible to first determine whether same-product-from-same-seller exists, and then determine whether same-product-from-different-seller exists.

Next, a process before the step S20 of establishing a binding relationship between the user and a same item of an item distribution center of a content distribution region is described below, for example, for the item selected by the user, distribution information of same items in item distribution centers of different regions is presented.

For the step S12 in Fig. 2, regardless of whether the interchanging setting of the user is non-interchanging or interchanging, it is possible to present distribution information of the selected item in item distribution centers of different regions, for example, information such as commissions or commission rates provided to the user by the item distribution centers of the different regions, and it is possible to present information of that in the different regions, respectively, so as to provide reference for the user to make decisions on whether to update the interchanging setting, how to update the interchanging setting, and the like.

Similarly, for the step S16 in Fig. 2, regardless of whether the same item exists in the item distribution center of the content distribution region, it is possible to present distribution information of the selected item in an item distribution center of a corresponding content distribution region.

In some embodiments, for the item selected by the user, it is possible to present distribution information of same items in item distribution centers of different regions according to a distribution mode of the item.

When the user adds the selected item to a window or a video anchor, different distribution information is presented according to an interchanging preference setting of the user and a same-item-from-same-seller/same-item-from-different-seller state of the item.

It is also possible to present, in an item detail page, the distribution information of the item in different manners, according to related information (such as a permission state) of the user, related information of the same-product-from-same-seller or same-product-from-different-seller of the current item.

For example, for same items of item distribution centers of different regions belonging to a same item provider, i.e., the case of same-product-from-same-seller, first distribution information is presented; and for same items of item distribution centers of different regions not belonging to a same item provider, i.e., the case of same-product-from-different-seller, second distribution information is presented, wherein the second distribution information is different from the first distribution information.

The first distribution information is, for example, commissions, commission rates or other information provided to the user by the item distribution centers of the different regions. Since the second distribution information involves items of different item providers, it additionally comprises, on the basis of the first distribution information, related information (for example, shop information) of the item distribution centers of the different item providers, related information (for example, prices) of the items, and the like.

When both the same-product-from-same-seller and the same-product-from-different-seller exist, it is possible to present both related information of the same-product-from-same-seller and related information of the same-product-from-different-seller. Of course, it is possible to preferentially present the related information of the same-product-from-same-seller to the user.

According to the distribution modes of the items, it is also possible to present only the related information of the same-product-from-same-seller to the user, without presenting the related information of the same-product-from-different-seller. For different distribution modes of the items, different distribution information may be presented.

Next, returning to Fig. 1, the step S20 of establishing a binding relationship between the user and a same item of an item distribution center of a content distribution region is continuously described.

For different content distribution regions, the binding relationship between the user and the same item can be established in different ways. It should be understood that there may be a plurality of content distribution regions, comprising, for example, a first content distribution region and a second content distribution region.

The first content distribution region is a content distribution region where the user is located. The content distribution region where the user is located is a local region, which is usually a default content distribution region or a default place of business. The second content distribution region is another content distribution region than the first content distribution region. The second content distribution region may be one or more other content distribution regions.

In some embodiments, it is possible to first establish, on a server of the first content distribution region, a binding relationship between the user and the selected item. Then, a binding relationship between the user and a same item of an item distribution center of the second content distribution region is established by a mirroring operation on a server of the second content distribution region.

When the second content distribution region comprises a plurality of other content distribution regions, a binding relationship between the user and a corresponding same item is respectively established by the mirroring operation on servers of the plurality of other content distribution regions, and it may be established synchronously or asynchronously.

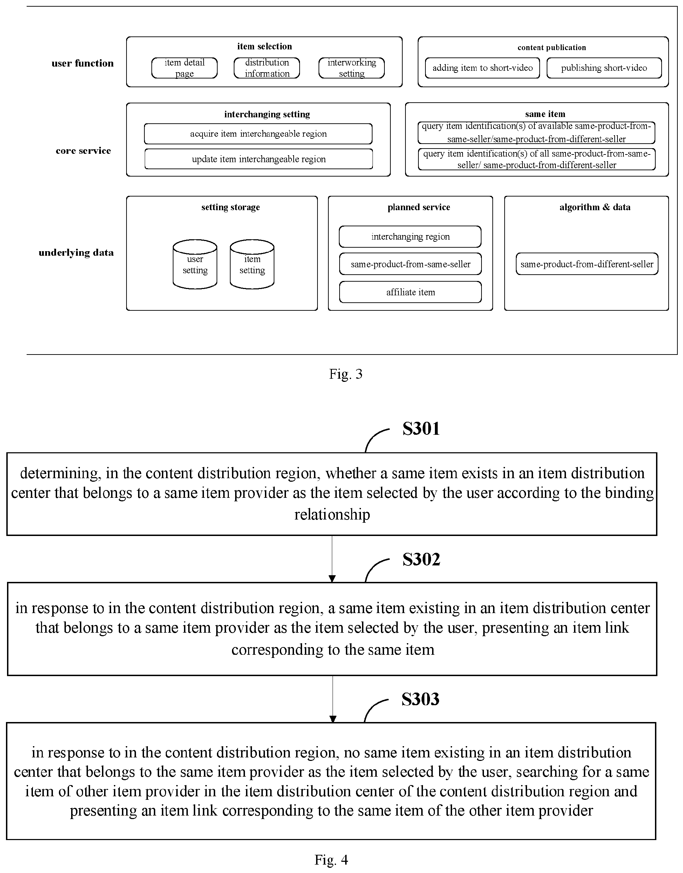

A system architecture of the server of the content distribution region is described below in conjunction with Fig. 3. Fig. 3 illustrates a schematic diagram of a system architecture of a server according to some embodiments of the present disclosure.

As shown in Fig. 3, the system architecture of the server of the content distribution region may comprise: underlying data, core service, user function.

The underlying data may comprise a user setting, an item setting and other information, for example, a user preference, a distribution mode of an item, and the like. The underlying data may also comprise planned services related to an interchanging region of the user, an affiliate item, same-product-from-same-seller, and the like. The affiliate item represents an item that can be selected by the user for marketing, which is different from an item that is sold by only an item provider itself. The underlying data may also comprise algorithm-related information, for example, a same item identification algorithm for same-product-from-same-seller, graph data, and the like.

The core service may comprise information related to setting or updating of an item interchanging region, for example, in which content distribution regions same items exist. The core service may also comprise query information of same-product-from-same-seller or same-product-from-different-seller, comprising both query information of all same-product-from-same-seller or same-product-from-different-seller, and query information of available same-product-from-same-seller or same-product-from-different-seller.

The user function may comprise item selection, content publication and other information. The item selection may comprise an item detail page, distribution information, an interchanging setting, etc., or a window list and other information. The content publication may comprise short video addition, such as using the selected item in a video, or comprise short video publication, such as adding an anchor for an item in a video.

Next, return to Fig. 1 for continuously describing the step S30 of, in response to the user publishing content by using the selected item, presenting, for the selected item, an item link corresponding to the content distribution region.

The item link corresponding to the content distribution region may be same-product-from-same-seller, or same-product-from-different-seller. When both the same-product-from-same-seller and the same-product-from-different-seller exist, the item link of the same-product-from-same-seller can be preferentially presented.

How to present the item link corresponding to the content distribution region is described in detail below in conjunction with Fig. 4. Fig. 4 illustrates a flow diagram of presenting an item link corresponding to a content distribution region according to some embodiments of the present disclosure.

As shown in Fig. 4, in response to the user publishing content by using the selected item, presenting, for the selected item, an item link corresponding to the content distribution region comprises: step S301, determining, in the content distribution region, whether a same item exists in an item distribution center that belongs to a same item provider as the item selected by the user according to the binding relationship; step S302, in response to in the content distribution region, a same item existing in an item distribution center that belongs to a same item provider as the item selected by the user, presenting an item link corresponding to the same item; step S303, in response to in the content distribution region, no same item existing in an item distribution center that belongs to the same item provider as the item selected by the user, searching for a same item of other item provider in the item distribution center of the content distribution region and presenting an item link corresponding to the same item of the other item provider, wherein the other item provider is different from the item provider, to which the item selected by the user belongs.

At the step S301, it is firstly determined whether same-product-from-same-seller exists, for example, for the selected item, it is determined whether the above first binding relationship exists.

If the same-product-from-same-seller exists, at the step S302, an item link of the same-product-from-same-seller in the content distribution region is preferentially presented.

If no same-product-from-same-seller exists, at the step S303, an item link of same-product-from-different-seller in the content distribution region is presented.

Here, the presenting an item link corresponding to the content distribution region comprises: when a user views the content published by using the selected item, presenting an item link corresponding to a same item of an item distribution center in a region where the user is located, wherein the user comprises not only the user of the content but also other content viewers, such as consumers.

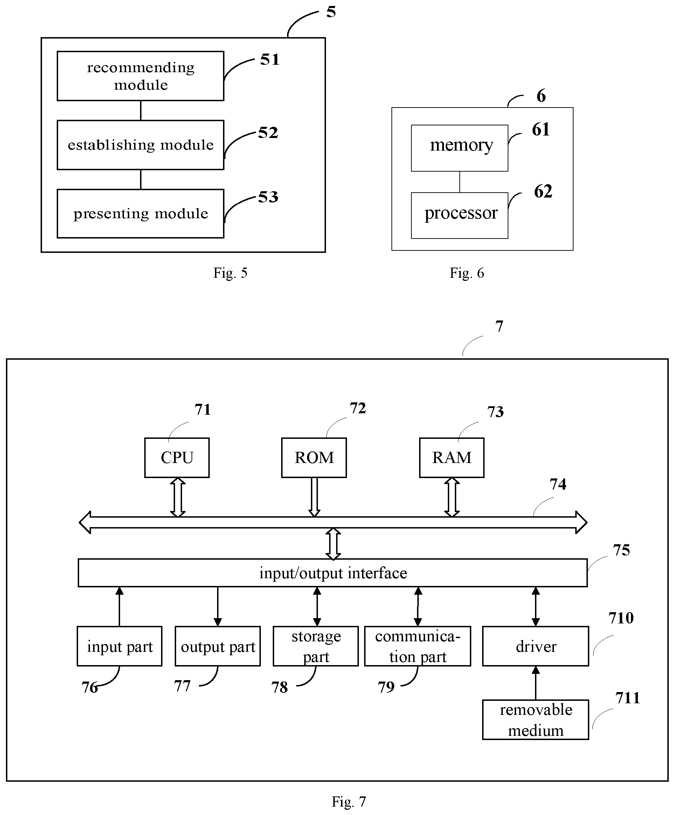

Various embodiments of the interaction method have been described in detail above in conjunction with Figs. 1 to 4. An interaction apparatus according to an embodiment of the present disclosure, for performing any of the above interaction methods, is described below in conjunction with Fig. 5.

Fig. 5 illustrates a block diagram of an interaction apparatus according to some embodiments of the present disclosure.

As shown in Fig. 5, the interaction apparatus 5 comprises: a recommending module 51 configured to recommend items to a user for content distribution by the user; an establishing module 52 configured to, for an item selected by the user, establish a binding relationship between the user and a same item of an item distribution center of a content distribution region; a presenting module 53 configured to, in response to the user publishing content by using the selected item, present, for the selected item, an item link corresponding to the content distribution region.

The recommending module 51 of the interaction apparatus 5 may be configured to perform the step S10 of Fig. 1. The establishing module 52 of the interaction apparatus 5 may be configured to perform the step S20 of Fig. 1. The presenting module 53 of the interaction apparatus 5 may be configured to perform the step S30 of Fig. 1.

Fig. 6 illustrates a block diagram of an interaction apparatus according to other embodiments of the present disclosure.

As shown in Fig. 6, the interaction apparatus 6 comprises: a memory 61; and a processor 62 coupled to the memory 61, the processor 62 being configured to perform, based on instructions stored in the memory 61, the interaction method according to any of the above embodiments.

The memory 61 is configured to store one or more computer-readable instructions. The memory 61 may comprise any combination of various forms of computer-readable storage media, such as a volatile memory and/or non-volatile memory, comprising, but not limited to, a random access memory (RAM), dynamic random access memory (DRAM), static random access memory (SRAM), read-only memory (ROM), and flash memory. The memory 61 may store, for example, an operating system, application, boot loader, database, and other programs, or store various applications, various data, and the like.

The processor 62 is configured to run the computer-readable instructions to implement the interaction method according to any of the above embodiments. For example, the processor 62 may be configured to perform the steps S10 to S30 of Fig. 1, the steps S12 to S16 of Fig. 2, or the steps S301 to S303 of Fig. 4. For specific implementation of each step of the interaction method, reference may be made to the foregoing embodiments, without repetitions herein.

The processor 62 may be embodied as various processing means such as a central processing unit (CPU), and network processor (NP); and may also be a digital signal processor (DSP), an application specific integrated circuit (ASIC), a field programmable gate array (FPGA) or other programmable logic device, discrete gate or transistor logic device, discrete hardware component. The central processing unit (CPU) may be an X86 or ARM architecture, etc.

The processor 62 and the memory 61 may directly or indirectly communicate with each other. For example, the processor 62 and the memory 61 may communicate over a network. The network may comprise a wireless network, a wired network, and/or any combination of wireless and wired networks. The processor 62 and the memory 61 can also communicate with each other via a system bus, which is not limited by the present disclosure.

It should be noted that the components of the interaction apparatus 6 shown in Fig. 6 are only exemplary and not limiting, and the interaction apparatus 6 may also have other components according to actual application needs. The processor 62 may control the other components in the interaction apparatus 6 to perform desired functions.

The interaction apparatus may be implemented by software, firmware and/or hardware, and may be integrated in an electronic device loaded with a related application.

Fig. 7 illustrates a block diagram of an electronic device according to some embodiments of the present disclosure.

The electronic device 7 shown in Fig. 7 may be a computer system having a dedicated hardware structure, which is capable of executing a corresponding function when a related application is loaded.

The electronic device comprise, but is not limited to, a mobile terminal such as a smartphone, laptop, personal digital assistant (PDA), tablet personal computer (Tablet PC), PMP (Portable Multimedia Player), vehicle-mounted terminal (e.g., vehicle-mounted navigation terminal), and wearable device, and a fixed terminal such as a digital TV, and desktop.

As shown in Fig. 7, a central processing unit (CPU) 71 executes various processes according to a program stored in a read-only memory (ROM) 72 or a program loaded from a storage part 78 to a random access memory (RAM) 73. In the RAM 73, data required by the CPU 71 when executing various processes and the like is stored as needed. The central processing unit is merely exemplary and may be other types of processors, such as the various processors described above. The ROM 72, RAM 73, and storage part 78 may be various forms of computer-readable storage media. It should be noted that although the ROM 72, RAM 73, and storage part 78 are shown separately in Fig. 7, one or more of them may be combined, or located in the same or different memory or storage module.

The CPU 71, ROM 72, and RAM 73 are connected to each other via a bus 74. An input/output interface 75 is also connected to the bus 74.

The following parts are connected to the input/output interface 75: an input part 76 such as a touch screen, a touch pad, a keyboard, a mouse, an image sensor, a microphone, an accelerometer, and a gyroscope; an output part 77, comprising a display such as a cathode ray tube (CRT), a liquid crystal display (LCD), a speaker, and a vibrator; the storage part 78, comprising a hard disk, a magnetic tape, etc.; and a communication part 79, comprising a network interface card such as a LAN card, and a modem. The communication part 79 allows communication processing to be performed over a network such as the Internet. It will be readily appreciated that while Fig. 7 shows that the various means or modules in the electronic device 7 communicate via the bus 74, they may also communicate over a network or in other manners, wherein the network may comprise a wireless network, a wired network, and/or any combination of wireless and wired networks.

A driver 710 is also connected to the input/output interface 75 as needed. A removable medium 711, such as a magnetic disk, an optical disk, a magneto-optical disk, and a semiconductor memory, is mounted on the driver 710 as needed, so that the computer program read out therefrom is installed in the storage part 78 as needed.

In the case of implementing the above series of processes by software, a program constituting the software may be installed from a network such as the Internet or a storage medium such as the removable medium 711.

According to an embodiment of the present disclosure, the processes described above with reference to the flow diagrams may be implemented as a computer software program. For example, some embodiments of the present disclosure comprise a computer program product which, when run on a computer, causes the computer to implement the interaction method according to any of the above embodiments. The computer program product comprises a computer program carried on a computer-readable medium, the computer program comprising program code for performing the method illustrated by the flow diagrams. In such an embodiment, the computer program may be downloaded and installed from a network via the communication part 79, or installed from the storage part 78, or installed from the ROM 72. When the computer program is executed by the CPU 71, the interaction method according to the embodiment of the present disclosure is performed.

It should be noted that, in the context of this disclosure, the computer-readable medium may be any tangible medium, which can contain, or store a program for use by or in conjunction with an instruction execution system, apparatus, or device.

The computer-readable medium may be a computer-readable storage medium or a computer-readable signal medium, or any combination of the two.

The computer-readable storage medium comprises, but is not limited to: an electronic, magnetic, optical, electromagnetic, infrared, or semiconductor system, apparatus, or device, or any combination of the foregoing. More specific examples of the computer-readable storage medium may comprise, but are not limited to: an electrical connection having one or more wires, a portable computer diskette, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing. In the present disclosure, the computer-readable storage medium may be any tangible medium that can contain or store a program which can be used by or in conjunction with an instruction execution system, apparatus, or device. The computer-readable storage medium has thereon stored a computer program which, when executed by a processor, implements the interaction method according to any of the foregoing embodiments.

The computer-readable signal medium may comprise a data signal propagated in baseband or as part of a carrier wave, in which computer-readable program code is carried. Such a propagated data signal may take a variety of forms, comprising, but not limited to, an electro-magnetic signal, optical signal, or any suitable combination of the forgoing. The computer-readable signal medium may also be any computer-readable medium other than the computer-readable storage medium, wherein the computer-readable signal medium can send, propagate, or transmit a program for use by or in conjunction with an instruction execution system, apparatus, or device. Program code contained on the computer-readable medium may be transmitted using any appropriate medium, comprising but not limited to: a wire, optical cable, RF (Radio Frequency), etc., or any suitable combination of the foregoing.

The above computer-readable medium may be contained in the above electronic device; or may exist separately without being assembled into the electronic device.

In some embodiments, there is further provided a computer program, comprising: instructions which, when executed by a processor, cause the processor to perform the interaction method according to any of the embodiments described above. For example, the instructions may be embodied as computer program code.

In embodiments of the present disclosure, computer program code for performing the operation of the present disclosure may be written in one or more programming languages or a combination thereof, wherein the above programming language comprises but is not limited to an object-oriented programming language such as Java, Smalltalk, and C++, and also comprises a conventional procedural programming language, such as a "C" language or a similar programming language. The program code may be executed entirely on a user's computer, partly on a user's computer, as a stand-alone software package, partly on a user's computer and partly on a remote computer, or entirely on a remote computer or server. In a scene where a remote computer is involved, the remote computer may be connected to a user's computer through any type of network, comprising a local area network (LAN) or a wide area network (WAN), or may be connected to an external computer (for example, through the Internet using an Internet service provider).

The flow diagrams and block diagrams in the drawings illustrate the possibly implemented architecture, functions, and operations of the system, method and computer program product according to various embodiments of the present disclosure. In this regard, each block in the flow diagrams or block diagrams may represent a module, program segment, or part of code, which comprises one or more executable instructions for implementing a specified logical function. It should also be noted that, in some alternative implementations, functions noted in blocks may occur in a different order from those noted in the drawings. For example, two blocks shown in succession may, in fact, be executed substantially concurrently, or they may sometimes be executed in a reverse order, which depends upon the functions involved. It will also be noted that each block in the block diagrams and/or flow diagrams, and a combination of the blocks in the block diagrams and/or flow diagrams, can be implemented by a special-purpose hardware-based system that performs specified functions or operations, or by a combination of special-purpose hardware and computer instructions.

The functions described above may be performed, at least in part, by one or more hardware logic components. For example, without limitation, an exemplary hardware logic component that may be used comprises: a field programmable gate array (FPGA), application specific integrated circuit (ASIC), application specific standard parts (ASSP), system on a chip (SOC), complex programmable logic devices (CPLD), and the like.

Although some specific embodiments of the present disclosure have been described in detail by examples, it should be understood by those skilled in the art that the above examples are for illustration only and are not intended to limit the scope of the present disclosure. It should be appreciated by those skilled in the art that modifications can be made to the above embodiments without departing from the scope and spirit of the present disclosure. The scope of the present disclosure is defined by the appended claims.

## Claims

1. An interaction method, comprising:
recommending items to a user for content distribution by the user;
for an item selected by the user, establishing a binding relationship between the user and a same item of an item distribution center of a content distribution region; and
presenting, for the selected item, an item link corresponding to the content distribution region in response to the user publishing content by using the selected item.

2. The interaction method according to claim 1, wherein the binding relationship comprises a first binding relationship, and for an item selected by the user, establishing a binding relationship between the user and a same item of an item distribution center of a content distribution region comprises:
determining, in the content distribution region, whether a same item exists in an item distribution center that belongs to a same item provider as the item selected by the user; and
binding the user with the item selected by the user and the same item of the same item provider in the item distribution center of the content distribution region in response to in the content distribution region, the same item existing in the item distribution center that belongs to the same item provider as the item selected by the user, to establish a first binding relationship between the user and same items.

3. The interaction method according to claim 2, further comprising:
for same items of item distribution centers of different regions belonging to the same item provider, creating a first association, to associate subitem identifications of the same items of the item distribution centers of the different regions to a same main item identification.

4. The interaction method according to claim 3, wherein determining, in the content distribution region, whether a same item exists in an item distribution center that belongs to a same item provider as the item selected by the user comprises:
determining whether the item selected by the user corresponds to a main item, and whether the main item corresponds to a subitem in the item distribution center of the content distribution region according to the first association.

5. The interaction method according to one of claims 1 to 4, wherein the binding relationship comprises a second binding relationship, and for the item selected by the user, establishing a binding relationship between the user and a same item of an item distribution center of a content distribution region comprises:
searching for a same item of other item provider in the item distribution center of the content distribution region, wherein the other item provider is different from the item provider, to which the item selected by the user belongs; and
binding the user with the item selected by the user and the same item of the other item provider in the item distribution center of the content distribution region, to establish a second binding relationship between the user and same items.

6. The interaction method according to claim 5, wherein searching for a same item of other item provider in the item distribution center of the content distribution region comprises:
searching for the same item of the other item provider in the item distribution center of the content distribution region according to related text information and picture information of an item.

7. The interaction method according to claim 5 or 6, further comprising:
creating a second association, to associate item identifications of same items of item distribution centers of different regions according to related information of an item.

8. The interaction method according to claim 7, wherein searching for a same item of another item provider in the item distribution center of the content distribution region comprises:
searching for an item, of which an item identification has the second association with the item selected by the user, in the content distribution region, as the same item of the other item provider in the item distribution center of the content distribution region.

9. The interaction method according to one of claims 1 to 8, further comprising, before establishing the binding relationship between the user and the same item of the item distribution center of the content distribution region:
determining whether the item selected by the user is distributed in item distribution centers of a plurality of regions according to setting information of the user;
determining, in response to the item selected by the user being distributed in item distribution centers of the plurality of regions, whether the content distribution region belongs to one or more of the plurality of regions; and
determining, in response to the content distribution region belonging to one or more of the plurality of regions, whether a same item exists in the item distribution center of the content distribution region.

10. The interaction method according to one of claims 1 to 9, further comprising, before establishing the binding relationship between the user and the same item of the item distribution center of the content distribution region:
for the item selected by the user, presenting distribution information of same items in item distribution centers of different regions according to an item distribution mode.

11. The interaction method according to claim 10, wherein:
for same items of item distribution centers of different regions belonging to a same item provider, presenting first distribution information; and
for same items of item distribution centers of different regions not belonging to a same item provider, presenting second distribution information, wherein the second distribution information is different from the first distribution information.

12. The interaction method according to one of claims 1 to 11, wherein the content distribution region comprises a first content distribution region and a second content distribution region, the first content distribution region being a content distribution region where the user is located, and the second content distribution region being another content distribution region than the first content distribution region, and for an item selected by the user, establishing a binding relationship between the user and a same item of an item distribution center of a content distribution region comprises:
establishing a binding relationship between the user and the selected item on a server of the first content distribution region; and
establishing a binding relationship between the user and a same item of an item distribution center of the second content distribution region by a mirroring operation, on a server of the second content distribution region.

13. The interaction method according to one of claims 1 to 12, wherein in response to the user publishing content by using the selected item, presenting, for the selected item, an item link corresponding to the content distribution region comprises:
determining, in the content distribution region, whether a same item exists in an item distribution center that belongs to a same item provider as the item selected by the user according to the binding relationship;
presenting, in response to a same item existing in an item distribution center that belongs to a same item provider as the item selected by the user in the content distribution region, an item link corresponding to the same item; and
searching for a same item of other item provider in the item distribution center of the content distribution region and presenting an item link corresponding to the same item of the other item provider, in response to in the content distribution region, no same item existing in an item distribution center that belongs to the same item provider as the item selected by the user, wherein the other item provider is different from the item provider, to which the item selected by the user belongs.

14. The interaction method according to one of claims 1 to 13, wherein the recommending items for content distribution by the user comprises:
recommending the items for content distribution by the user according to user preference and item distribution mode.

15. An electronic device, comprising:
a recommending module configured to recommend items to a user for content distribution by the user;
an establishing module configured to, for an item selected by the user, establish a binding relationship between the user and a same item of an item distribution center of a content distribution region; and
a presenting module configured to present, for the selected item, an item link corresponding to the content distribution region in response to the user publishing content by using the selected item.

16. An electronic device, comprising:
a memory; and
a processor coupled to the memory, the processor being configured to perform, based on instructions stored in the memory, the interaction method according to one of claims 1 to 14.

17. A computer-readable storage medium having thereon stored instructions which, when executed by a processor, implement the interaction method according to one of claims 1 to 14.

18. A computer program product having thereon stored a computer program which, when executed by a processor, implements the interaction method according to one of claims 1 to 14.

19. A computer program having thereon stored instructions which, when executed by a processor, implement the interaction method according to one of claims 1 to 14.
